# EUROPEAN PATENT APPLICATION

(11) **EP 4 726 431 A1**
(43) Date of publication of application: **15.04.2026**
(21) Application number: 25207446.3
(22) Date of filing: 08.10.2025
(51) Int. Cl.: G01S 7/4863, G01S 7/487

(54) **SAMPLING METHOD AND DEVICE, LIDAR, CHIP AND STORAGE MEDIUM**

(30) Priority: 08.10.2024 CN 202411408862
(71) Applicant: Suteng Innovation Technology Co., Ltd, Shenzhen City Guangdong 518000 (CN)
(72) Inventor: GONG, Changsheng, Shenzhen City (CN)
(74) Representative: Ran, Handong

(57) **Abstract**

The application discloses a sampling method and device, a LiDAR, a chip and a storage medium, and belongs to the technical field of radars. According to the technical scheme provided by the embodiments of this application, at least two photosensitive unit groups of a LiDAR are sampled at the at least two sampling moments in any sampling period, sampling data of each photosensitive unit group is obtained, and high-rate sampling in units of photosensitive unit groups is realized. The sampling data of the at least two photosensitive unit groups is fused, that is, the sampling data of the at least two photosensitive unit groups is compressed, target sampling data of the sampling period is obtained, histogram data of a target object is generated by using the target sampling data, and therefore, the sampling data is compressed while increasing the sampling rate, and the storage space consumption and data processing cost are reduced.

## Description

### TECHNICAL FIELD

The application belongs to the field of laser technology, and in particular, relates to a sampling method and device, a LiDAR, a chip and a storage medium.

### BACKGROUND

For a LiDAR, measurement accuracy is an important parameter for evaluating its performance.

In the related art, a LiDAR typically employs a photosensitive unit array to perform data sampling on an echo signal, so as to obtain sampling data of the echo signal. Increasing the sampling rate of a photosensitive unit group can improve the measurement accuracy of the LiDAR.

However, increasing the sampling rate results in a substantial increase in the amount of sampling data, which in turn leads to significant consumption of storage space and increased data processing overhead.

### SUMMARY

Embodiments of the present application provides a sampling method and device, a LiDAR, a chip and a storage medium, which can compress obtained sampling data in the case of increasing the sampling rate, reduce storage space usage, and decrease data processing overhead. Technical solutions are as follows.

In one aspect, a sampling method for a photosensitive unit group is provided, the method including:
in a detection period, at least two groups of photosensitive units of the LiDAR are sampled at at least two sampling moments respectively, to obtain sampling data of each photosensitive unit group;
the sampling data of the at least two groups of photosensitive units is fused to obtain target sampling data of the detection period, where the target sampling data is used to generate histogram data of a target object.

As an example, the sampling of the at least two groups of photosensitive units of the LiDAR at the at least two sampling moments to obtain the sampling data of each of the groups of photosensitive units comprises:
for any one of the at least two groups of photosensitive units, photosensitive units within the group are sampled at a target sampling moment corresponding to the photosensitive unit group in the at least two sampling moments, to obtain the sampling data of the photosensitive unit group.

In one embodiment of the first aspect, the sampling of the photosensitive units in the photosensitive unit group at the target sampling moment corresponding to the photosensitive unit group in the at least two sampling moments to obtain the sampling data of the photosensitive unit group comprises:
the photosensitive units within the group are sampled at the target sampling moment corresponding to the photosensitive unit group in the at least two sampling moments, to obtain unit sampling data of each photosensitive unit in the photosensitive unit group; and
the unit sampling data of each photosensitive unit in the photosensitive unit group is fused to obtain the sampling data of the photosensitive unit group.

In one embodiment of the first aspect, the fusing of the unit sampling data of each photosensitive unit in the photosensitive unit group to obtain the sampling data of the photosensitive unit group includes:
the unit sampling data of each photosensitive unit in the photosensitive unit group is added to obtain the sampling data of the photosensitive unit group;
or, the unit sampling data of each photosensitive unit in the photosensitive unit group is weighted and summed to obtain the sampling data of the photosensitive unit group, wherein a weight corresponding to each of the photosensitive units is associated with a position of the photosensitive unit in the photosensitive unit group.

In one embodiment of the first aspect, before the sampling of the photosensitive units in the photosensitive unit group at the target sampling moment corresponding to the photosensitive unit group in the at least two sampling moments to obtain the sampling data of the photosensitive unit group, the method further includes:
determining a sampling mode corresponding to each photosensitive unit group based on a position of each photosensitive unit group in the photosensitive unit array of the LiDAR, different sampling modes corresponding to different sampling rates and sampling moment selection modes;
where the sampling of the photosensitive units in the photosensitive unit group at the target sampling moment corresponding to the photosensitive unit group at the at least two sampling moments to obtain the sampling data of the photosensitive unit group includes:
   determining the target sampling moment corresponding to the photosensitive unit group from the at least two sampling moments based on the sampling mode corresponding to the photosensitive unit group; and
   sampling the photosensitive unit group at the target sampling moment to obtain sampling data of the photosensitive unit group.

In one embodiment of the first aspect, the sampling mode corresponding to each photosensitive unit group is determined based on a position of the photosensitive unit group in the photosensitive unit array, including:
for any photosensitive unit group in the at least two photosensitive unit groups, in a case where the photosensitive unit group is located in the edge region of the photosensitive unit array, the sampling mode corresponding to the photosensitive unit group is determined as a first sampling mode; and
in a case where the photosensitive unit group is located in the center region of the photosensitive unit array, the sampling mode corresponding to the photosensitive unit group is determined as a second sampling mode, and a sampling rate corresponding to the first sampling mode is smaller than a sampling rate corresponding to the second sampling mode.

In one embodiment of the first aspect, the sampling the at least two photosensitive unit groups of the LiDAR at the at least two sampling moments to obtain the sampling data of each photosensitive unit group, including:
for any photosensitive unit group in the at least two photosensitive unit groups, a photosensitive unit set in the photosensitive unit group is sampled at a target sampling moment corresponding to the photosensitive unit group in the at least two sampling moments to obtain the sampling data of the photosensitive unit group, the photosensitive unit set being a photosensitive unit row or a photosensitive unit column.

In one embodiment of the first aspect, the sampling the photosensitive unit set in the photosensitive unit group at the target sampling moment corresponding to the photosensitive unit group at the at least two sampling moments to obtain the sampling data of the photosensitive unit group, including:
sampling the photosensitive unit set in the photosensitive unit group at a set sampling moment corresponding to each photosensitive unit set in the photosensitive unit group at the at least two sampling moments to obtain set sampling data of each photosensitive unit set in the photosensitive unit group; and
fusing the set sampling data of each photosensitive unit set in the photosensitive unit group to obtain the sampling data of the photosensitive unit group.

In one embodiment of the first aspect, the sampling the photosensitive unit set in the photosensitive unit group at the set sampling moment corresponding to each photosensitive unit set in the photosensitive unit group at the at least two sampling moments to obtain the set sampling data of each photosensitive unit set in the photosensitive unit group, comprising:
for any photosensitive unit set in the photosensitive unit group, the set sampling moment corresponding to the photosensitive unit set is determined from the at least two sampling moments based on the sampling mode corresponding to the photosensitive unit set;
sampling the photosensitive unit set at the set sampling moment to obtain the set sampling data of the photosensitive unit set.

In one embodiment of the first aspect, the set sampling moment corresponding to the photosensitive unit set is determined from the at least two sampling moments based on a sampling mode corresponding to the photosensitive unit set, including:
in a case where the sampling mode corresponding to the photosensitive unit set is a first sampling mode, an order of the photosensitive unit set in the photosensitive unit group is determined; and a set sampling moment corresponding to the photosensitive unit set is determined from the at least two sampling moments based on the order of the photosensitive unit set in the photosensitive unit group; and
in a case where the sampling mode corresponding to the photosensitive unit set is a second sampling mode, the at least two sampling moments are determined as the set sampling moment corresponding to the photosensitive unit set, and a sampling rate corresponding to the first sampling mode is smaller than a sampling rate corresponding to the second sampling mode.

In one embodiment of the first aspect, the fusing of the sampling data of the at least two photosensitive unit groups to obtain the target sampling data of the detection period includes:
adding the sampling data of the at least two photosensitive unit groups to obtain the target sampling data of the detection period;
or, performing weighted summation on the sampling data of the at least two photosensitive unit groups to obtain the target sampling data of the detection period, wherein a weight corresponding to the photosensitive unit group is associated with a position of the photosensitive unit group in the photosensitive unit array.

In one embodiment of the first aspect, before the fusing of the sampling data of the at least two photosensitive unit groups to obtain the target sampling data of the detection period, the method further includes:
determining a data collection requirement corresponding to the detection period; and in a case where the data collection requirement is full-amount collection, outputting the sampling data of the at least two photosensitive unit groups;
or, determining a sampling data amount threshold corresponding to the detection period; and in a case where a data amount of the sampling data of the at least two photosensitive unit groups is smaller than or equal to the sampling data amount threshold, outputting the sampling data of the at least two photosensitive unit groups.

In an aspect, a sampling device of a photosensitive unit group is provided, the device including:
a sampling module, configured to sample at least two photosensitive unit groups of a LiDAR at at least two sampling moments in a detection period to obtain sampling data of each photosensitive unit group; and
a fusion module, configured to fuse the sampling data of the at least two photosensitive unit groups to obtain target sampling data of the detection period, the target sampling data being used to generate histogram data of a target object.

In an aspect, a LiDAR is provided, the LiDAR including at least two photosensitive unit groups, at least two flip-flop groups, a clock signal generator, and an addition unit group, one photosensitive unit group being connected with at least one flip-flop group; the clock signal generator being connected with the at least two flip-flop groups respectively;
in a detection period, the clock signal generator generates at least two phase clock signals and sends the at least two phase clock signals to corresponding flip-flop groups respectively, one phase corresponding to one sampling moment;
the at least two flip-flop groups output sampling data of each of the photosensitive unit groups based on the input clock signal and photosensitive data of the photosensitive unit group; and
the addition unit group fuses the sampling data of the at least two photosensitive unit groups to obtain target sampling data of the detection period, and the target sampling data is used to generate histogram data of a target object.

In an aspect, a chip is provided, including at least two photosensitive unit groups, at least two flip-flop groups, a clock signal generator, and an addition unit group, one photosensitive unit group being connected with at least one flip-flop group, the clock signal generator being connected with the at least two flip-flop groups respectively;
in a detection period, the clock signal generator generates at least two phase clock signals and sends the at least two phase clock signals to corresponding flip-flop groups respectively, one phase corresponding to one sampling moment;
the at least two flip-flop groups output sampling data of each of the photosensitive unit groups based on the input clock signal and photosensitive data of the photosensitive unit group; and
the addition unit group fuses the sampling data of the at least two photosensitive unit groups to obtain target sampling data of the detection period, and the target sampling data is used to generate histogram data of a target object.

In an aspect, a computer readable storage medium is provided, in which at least one computer program is stored which, when loaded and executed by a processor, causes the processor to implement the sampling method for a photosensitive unit group.

In an aspect, a computer program product or a computer program is provided, the computer program product or the computer program including program code stored in a computer readable storage medium, a processor of a computer device reading the program code from the computer readable storage medium, and the processor executing the program code to enable the computer device to perform the sampling method of the photosensitive unit group.

According to the technical solution provided in the embodiments of the present application, in a detection period, at least two photosensitive unit groups of the LiDAR are sampled at the at least two sampling moments to obtain sampling data of each photosensitive unit group, and high-rate sampling is realized in units of the photosensitive unit group. The sampling data of the at least two photosensitive unit groups is fused, that is, the sampling data of the at least two photosensitive unit group is compressed to obtain target sampling data of the detection period, and histogram data of a target object can be generated by using the target sampling data, so that compression of the sampling data is realized under the condition of increasing the sampling rate, and storage space occupation and data processing overhead are reduced.

### BRIEF DESCRIPTION OF DRAWINGS

In order to more clearly illustrate the technical solutions of the embodiments of the present application, the drawings are briefly described below. Obviously, the drawings in the following description merely show some of the embodiments of the present application, and other drawings can be derived by those of ordinary skill in the art without creative effort.
FIG. 1 is a schematic diagram of an implementation environment of a sampling method for a photosensitive unit group according to an embodiment of the present application;
FIG. 2 is a flow chart of a sampling method for a photosensitive unit group according to an embodiment of the present application;
FIG. 3 is a flow chart of another sampling method for a photosensitive unit group according to an embodiment of the present application;
FIG. 4 is a schematic diagram of sampling a photosensitive unit by using a flip-flop group according to an embodiment of the present application;
FIG. 5 is a schematic diagram of a corresponding relationship between a photosensitive unit group and a clock signal according to an embodiment of the present application;
FIG. 6 is another schematic diagram of sampling a photosensitive unit by using a flip-flop group according to an embodiment of the present application;
FIG. 7 is a schematic diagram of sampling a photosensitive unit group by using a flip-flop group according to an embodiment of the present application;
FIG. 8 is another schematic diagram of sampling a photosensitive unit group by using a flip-flop group according to an embodiment of the present application;
FIG. 9 is another schematic diagram of sampling a photosensitive unit group by using a flip-flop group according to an embodiment of the present application;
FIG. 10 is a schematic diagram of fusing sampling data by using an addition unit group according to an embodiment of the present application;
FIG. 11 is a flow chart of another sampling method of a photosensitive unit group according to an embodiment of the present application;
FIG. 12 is a flow chart of another sampling method of a photosensitive unit group according to an embodiment of the present application; and
FIG. 13 is a schematic diagram of a sampling device structure of a photosensitive unit group according to an embodiment of the present application.

### DETAILED DESCRIPTION

In order to make the objectives, technical solutions and advantages of the present application clearer, the following will further describe the embodiments of the present application in detail with reference to the drawings.

In the present application, the terms "first", "second", etc. are used to distinguish the same or similar items with substantially the same function and effect, and it should be understood that there is no logical or timing dependency between "first", "second", "nth", and no limitation on the number and execution order.

In order to describe the technical solutions provided by the embodiments of the present application, the following introduces the terms related to the embodiments of the present application.

LiDAR: is a remote sensing technology that uses laser pulses to measure distance and map terrain. It works by emitting laser pulses toward a target and measuring the time it takes for these pulses to be reflected back. LiDAR technology has a wide range of applications in autonomous driving, aerial surveying, environmental monitoring, and other fields.

Photosensitive unit array: the photosensitive unit array is the core component of modern digital imaging, which is composed of at least two photosensitive units, and each photosensitive unit can convert the received optical signal into an electrical signal. In digital imaging, the photosensitive unit array usually refers to the pixel array of the image sensor, and in optical communication, the photosensitive unit array refers to the photodetector array.

Clock signal: the clock signal is a basic signal in digital circuits, which usually appears as a periodic square wave with a fixed frequency and period. The main function of the clock signal is to provide synchronization for digital circuits, ensuring that each part of the circuit can perform operations at the right time.

Phase: for a wave, the position of a particular moment in its cycle: a scale of whether it is at a peak, trough, or some point in between. Phase describes the measure of the change in a signal's waveform, usually in degrees (angular measure), also called the phase angle. When a signal's waveform changes in a periodic manner, one complete cycle of the waveform is 360°. In the embodiments of the present application, the phase refers to the clock phase. That is, the phase of the clock signal, and the clock phase specifies the timing of data sampling, which determines which edge of the clock signal the data is sampled.

Sampling rate: the sampling rate is a core concept in digital signal processing, which refers to the number of samples taken of a continuous signal in a unit of time, usually expressed in Hertz (Hz). In the embodiments of the present application, the sampling rate refers to the sampling rate of the LiDAR, and the sampling rate of the LiDAR refers to the number of times of ranging that the LiDAR can perform in one second, which is directly related to the spatial resolution and data acquisition efficiency of the LiDAR. The high sampling rate LiDAR can obtain more data points in a short time, thereby improving the spatial resolution and making the generated point cloud data more dense and detailed.

Flip-flop: the flip-flop is a basic element in digital circuits, mainly used for storing one bit of binary information, that is, it can be in two data: 0 or 1. In the embodiments of the present application, the flip-flop comprises a D flip-flop, which is a flip-flop with a single data input (D) and a clock control end (CLK). Its output data Q follows the data change of the D input at the edge (usually the rising edge) of the clock signal.

In the related art, the sampling data of each photosensitive unit in the photosensitive unit array needs to be stored separately. For example, if the photosensitive unit array comprises n photosensitive units, n 1-bit storage units are needed to store the sampling data of the n photosensitive units. As the sampling rate increases, the data volume of the sampling data surges, the number of storage units needs to be increased accordingly, and the processing overhead when the sampling data is processed subsequently also increases. After the technical solution provided in the embodiments of the present application is adopted, the sampling data of the photosensitive unit group can be compressed, thereby reducing the number of storage units and the data processing overhead.

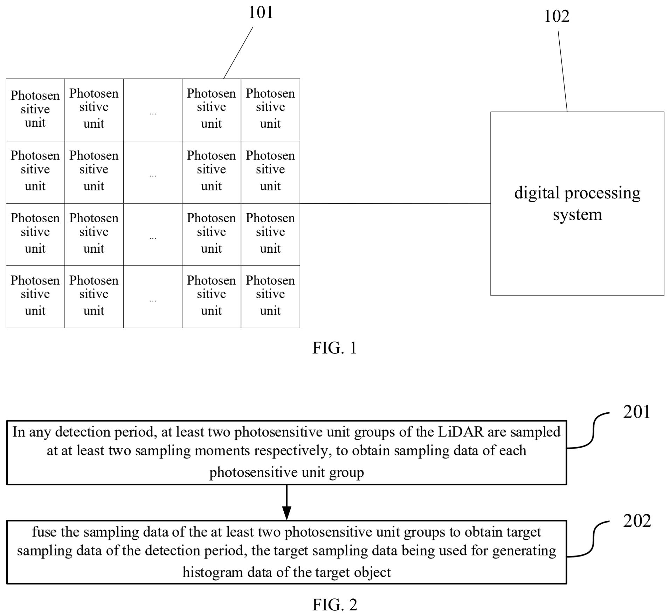

FIG. 1 is a schematic diagram of an implementation environment of a sampling method for a photosensitive unit group provided in an embodiment of the present application. As shown in FIG. 1, the implementation environment can comprise a receiving chip, which comprises a photosensitive unit array 101 and a digital processing system 102.

The photosensitive unit array 101 and the digital processing system 102 are electrically connected through a processing circuit (not shown in FIG. 1), and the processing circuit is configured to amplify and preprocess an electrical signal output by the photosensitive unit array 101, thereby facilitating sampling by the digital processing system 102. In the embodiments of the present application, the processing circuit is set by a technician according to actual conditions, and the embodiments of the present application do not limit the processing circuit.

The photosensitive unit array 101 comprises at least two photosensitive units, and each photosensitive unit can convert a received optical signal into an electrical signal. The photosensitive unit array 101 can be a SPAD array or a SIPM, and the present application does not limit the photosensitive unit array 101.

The digital processing system 102 can comprise a clock signal generator, a flip-flop group, an adder, and the like. It can be understood that the clock signal generator can be a phase-locked loop (PLL).

After the implementation environment of the embodiments of the present application is introduced, the application scenario of the technical solution provided by the embodiments of the present application is described as follows.

The technical solution provided by the embodiments of the present application can be applied to a LiDAR configured with a photosensitive unit array. By using the technical solution provided by the embodiments of the present application, sampling data can be compressed while the sampling rate of a single sampling period is increased, thereby achieving the effect of low data volume at a high sampling rate.

The sampling method of the photosensitive unit group provided by the embodiments of the present application is described below. As shown in FIG. 2, a detection chip with a LiDAR as an execution subject is taken as an example. It can be understood that the chip comprises a photosensitive unit array and a digital processing system. The specific method comprises the following steps.

201. In any detection period, at least two photosensitive unit groups of the LiDAR are sampled at at least two sampling moments respectively, to obtain sampling data of each photosensitive unit group.

In the process of ranging and velocity measuring of the target object, one detection period of the LiDAR comprises at least two sampling periods, and the LiDAR needs to sample in the at least two sampling periods. In some embodiments, the sampling period is also referred to as a sub-detection period. The photosensitive unit array comprises at least two photosensitive unit groups. In the sampling of the photosensitive unit array, the sampling time instants corresponding to different photosensitive units in the same photosensitive unit group are the same, and the sampling time instants corresponding to at least two photosensitive unit groups in different photosensitive unit groups are different. It can be understood that when the photosensitive unit array comprises at least two photosensitive unit groups, the sampling time instants corresponding to any two photosensitive unit groups can be all different, or the sampling time instants of some photosensitive unit groups are different and the sampling time instants of some photosensitive unit groups are the same, where the specific setting of the sampling time instant is related to the detection accuracy of the radar system. As another example, one detection period can comprise at least two sampling periods, each sampling period corresponding to at least two photosensitive unit groups, and the sampling time instants of the at least two photosensitive unit groups in one sampling period are all different. For example, one detection period comprises 2 sampling periods, and each sampling period comprises sampling of 3 photosensitive unit groups, and the 3 photosensitive unit groups correspond to different sampling time instants. In one sampling period, the detection chip samples the photosensitive unit array at least once, one sampling corresponding to one sampling time instant, and the increase of the sampling times in one detection period also increases the overall sampling rate. The sampling data is the data obtained by sampling the photosensitive unit group, that is, the sum of the data obtained by sampling the plurality of photosensitive units in the photosensitive unit group. In the case of a photosensitive unit row, the sampling data is also referred to as row sampling data. In the case of a photosensitive unit column, the sampling data is also referred to as column sampling data. In the case of a photosensitive unit block, the sampling data is also referred to as block sampling data. Therefore, the embodiment does not limit the number of photosensitive units comprised in the photosensitive unit group and the arrangement form of the photosensitive units comprised in the photosensitive unit group.

202. fuse the sampling data of the at least two photosensitive unit groups to obtain target sampling data of the detection period, the target sampling data being used for generating histogram data of the target object.

It can be understood that when the detection period comprises a plurality of sampling periods, the sampling data of the detection unit group in each sampling period can be fused to obtain fusion data of the sampling period, and the fusion data of the plurality of sampling periods is fused to generate the target sampling data of the detection period, and the histogram data of the target object is generated according to the target sampling data.

The sampling data of the at least two photosensitive unit groups is fused for data compression, and target sampling data of the sampling period is obtained, that is, sampling data obtained after compression. The target object is an object to be ranged, and the histogram data is used to count the number of photons sensed by the photosensitive unit array in different time bins, thereby being used to range the target object.

According to the technical scheme provided in the embodiment of the application, in any detection period, at least two photosensitive unit groups of the LiDAR are sampled at the at least two sampling moments, sampling data of each photosensitive unit group is obtained, and high-rate sampling in units of photosensitive unit group is implemented. The sampling data of the at least two photosensitive unit groups is fused, that is, the sampling data of the at least two photosensitive unit groups is compressed, target sampling data of the detection period is obtained, histogram data of the target object can be generated by using the target sampling data, and thus compression of the sampling data is implemented under the condition of improving the sampling rate, and storage space occupation and data processing overhead are reduced.

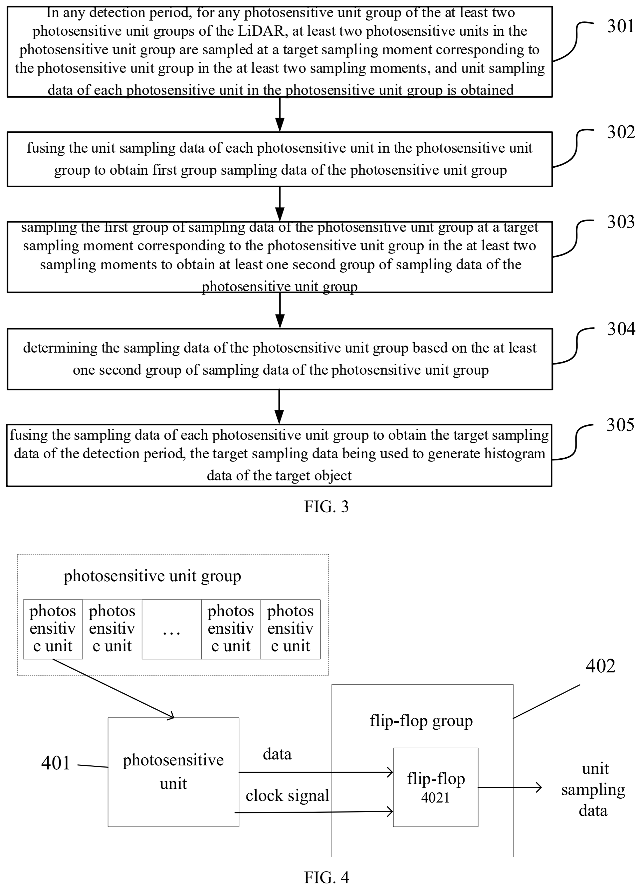

The steps 201-202 are a simple description of the method for sampling the photosensitive unit group provided in the embodiment of the application. The technical scheme provided in the embodiment of the application will be described more clearly in combination with some examples. Referring to FIG. 3, taking a detection chip whose execution subject is a LiDAR as an example, the method comprises the following steps.

301. In any detection period, for any photosensitive unit group of the at least two photosensitive unit groups of the LiDAR, at least two photosensitive units in the photosensitive unit group are sampled at a target sampling moment corresponding to the photosensitive unit group in the at least two sampling moments, and unit sampling data of each photosensitive unit in the photosensitive unit group is obtained.

In the process of ranging and velocity measuring of the target object, one detection period of the LiDAR comprises at least two sampling periods, and the LiDAR needs to sample in the at least two sampling periods. The sampling period is also referred to as a sub-detection period in some embodiments. The photosensitive unit array comprises at least two photosensitive unit groups. In some embodiments, the photosensitive unit group is a photosensitive unit row, a photosensitive unit column, or a photosensitive unit block in the photosensitive unit array, and the embodiments of the present application do not limit the photosensitive unit group. In the sampling of the photosensitive unit array, the sampling moments of different photosensitive units in the same photosensitive unit group are the same, and the sampling moments of at least two photosensitive unit groups in different photosensitive unit groups are different. In one detection period, the detection chip samples the photosensitive unit array at least once, one sampling corresponds to one sampling moment, and an increase in the sampling times in one detection period increases the overall sampling rate. The unit sampling data is also referred to as unit detection data, and one unit sampling data is sampling data obtained after sampling of one photosensitive unit. In some embodiments, the photosensitive unit is a Single Photon Avalanche Diode (SPAD), and the photosensitive unit array is also referred to as a SPAD array. It should be noted that the step 301 is described by taking the sampling of the photosensitive unit in any photosensitive unit group in the at least two photosensitive unit groups as an example, and the sampling mode of the photosensitive unit in other photosensitive unit groups in the at least two photosensitive unit groups belongs to the same inventive concept as the description in the step 301. The unit sampling data indicates whether the photosensitive unit senses a photon. For example, when the photosensitive unit senses a photon, the data output by the flip-flop is 1; and when the photosensitive unit does not sense a photon, the data output by the flip-flop is 0.

In one implementation, the photosensitive unit group is sampled at a target sampling moment corresponding to the photosensitive unit group in the at least two sampling moments, to obtain unit sampling data of each photosensitive unit in the photosensitive unit group.

The number of the target sampling moments is at least two, that is, one photosensitive unit group can correspond to one target sampling moment or multiple target sampling moments.

In this implementation, the at least two photosensitive units in the photosensitive unit group are sampled at the target sampling moment corresponding to the photosensitive unit group, so that the sampling of the photosensitive unit and the photosensitive unit group is kept synchronized.

In order to more clearly describe the above implementations, the above implementations are described below by taking two examples.

In the case where one photosensitive unit group corresponds to one target sampling moment, each photosensitive unit in the photosensitive unit group is sampled at a first target sampling moment corresponding to the photosensitive unit group in the at least two sampling moments, to obtain unit sampling data of each photosensitive unit in the photosensitive unit group.

The sampling moments corresponding to different photosensitive units in the photosensitive unit group are all the first target sampling moment.

For example, one photosensitive unit is connected with one flip-flop group, the flip-flop group comprises at least one flip-flop, the phases of the clock signals input by the flip-flops in the same flip-flop group are the same, the data output by the flip-flop groups connected with the photosensitive units in the photosensitive unit group is acquired, the phases of the clock signals input by the flip-flop groups connected with the photosensitive units in the photosensitive unit group are the phases corresponding to the first target sampling moment, and the data output by the flip-flop groups connected with the photosensitive units in the photosensitive unit group is determined as the unit sampling data of the photosensitive units in the photosensitive unit group.

The flip-flop comprises a data input end, a clock signal input end and a data output end, and the flip-flop can update the data output end according to the data input end by using the clock signal input by the clock signal input end. Taking a D flip-flop as an example, the D flip-flop can update the data of the data input end D to the data output end Q at the rising edge and/or the falling edge of the clock signal, that is, the D flip-flop can update the data output end Q only at the rising edge and/or the falling edge of the clock signal. In the embodiment of the application, each update of the data output end Q can be regarded as one sampling of the photosensitive unit, and the output electrical signal of the photosensitive unit is determined by whether the photosensitive unit senses photons. In the case where the flip-flop group comprises one flip-flop, the photosensitive unit is connected with the data input end of the flip-flop. In the case where the flip-flop group comprises two or more flip-flops, the data input end of a first flip-flop in the flip-flop group is connected with the photosensitive unit, the data input end of a second flip-flop is connected with the data output end of the first flip-flop, and so on. The clock signals input by different flip-flops in the same flip-flop group are the same. The number of flip-flops in the flip-flop group is set by a technician according to an actual situation. Increasing the number of flip-flops in the flip-flop group can improve the stability of sampling, and reducing the number of flip-flops in the flip-flop group can reduce resource consumption. The embodiment of the application does not limit this. In addition, adjusting the phase of the clock signal can change the time when the rising edge and the falling edge of the clock signal appear. The time when the rising edge or the falling edge appears corresponds to the first target sampling moment. Therefore, the first target sampling moment can be adjusted by adjusting the phase of the clock signal. In some embodiments, the period length of the clock signal is the same as the period length of the detection period to adapt to the detection period. In some embodiments, the clock signal input by the flip-flop is generated by a clock signal generator, and the clock signal generator can generate clock signals with different phases.

Referring to FIG. 4, in a case where the flip-flop group comprises one flip-flop, for any photosensitive unit 401 in the at least two photosensitive units, the photosensitive unit 401 outputs different electrical signals according to whether or not photons are sensed, the different electrical signals correspond to different data, and the data is input to a data input end of a flip-flop 4021 connected to the photosensitive unit 401 in a flip-flop group 402 connected to the photosensitive unit 401. In a case where a clock signal input to the flip-flop 4021 is a rising edge or a falling edge, the flip-flop 4021 updates the data input to the data input end to a data output end, and the data of the data output end is the unit sampling data of the photosensitive unit. Since the flip-flop only updates data at the rising edge or the falling edge of the clock signal, any change in data at the data input end of the flip-flop is not updated to the data output end in a case where the rising edge or the falling edge of the clock signal has not arrived.

In order to more clearly describe the above embodiments, the following describes a manner of determining the first target sampling moment corresponding to the photosensitive unit group in the above embodiments.

In one embodiment, in a case where the photosensitive unit group corresponds to one sampling moment, an order of the photosensitive unit group in a photosensitive unit group set to which the photosensitive unit group belongs is determined, and sampling moments corresponding to different photosensitive unit groups in the same photosensitive unit group set are different. The first target sampling moment corresponding to the photosensitive unit group is determined from the at least two sampling moments based on the order of the photosensitive unit group in the photosensitive unit group set to which the photosensitive unit group belongs.

The photosensitive unit group set comprises at least two photosensitive unit groups. In a case where the photosensitive unit group is a photosensitive unit row, the photosensitive unit group set is a set of photosensitive unit rows. In a case where the photosensitive unit group is a photosensitive unit column, the photosensitive unit group set is a set of photosensitive unit columns. The number of photosensitive unit groups in the photosensitive unit group set is set by a technician according to an actual situation, for example, is set to 2, 3, 4, 5, or the like, and the embodiments of the present application do not limit the number of photosensitive unit groups in the photosensitive unit group set. In some embodiments, the number of photosensitive unit groups in the photosensitive unit group set is the same as the at least two sampling moments, and in this case, one photosensitive unit group in the photosensitive unit group set corresponds to one sampling moment in the at least two sampling moments. Since the sampling moments corresponding to different photosensitive unit groups in the photosensitive unit group set are different, the number of sampling times of the photosensitive unit group in the photosensitive unit group set can be directly bound to the sampling moment, and the sampling moment corresponding to the photosensitive unit group can be quickly determined.

Taking an example in which the photosensitive unit group set comprises three photosensitive unit groups (a first photosensitive unit group, a second photosensitive unit group, and a third photosensitive unit group) and the at least two sampling moments comprise a first sampling moment, a second sampling moment, and a third sampling moment, the following describes a manner of determining the first target sampling moment of the first photosensitive unit group.

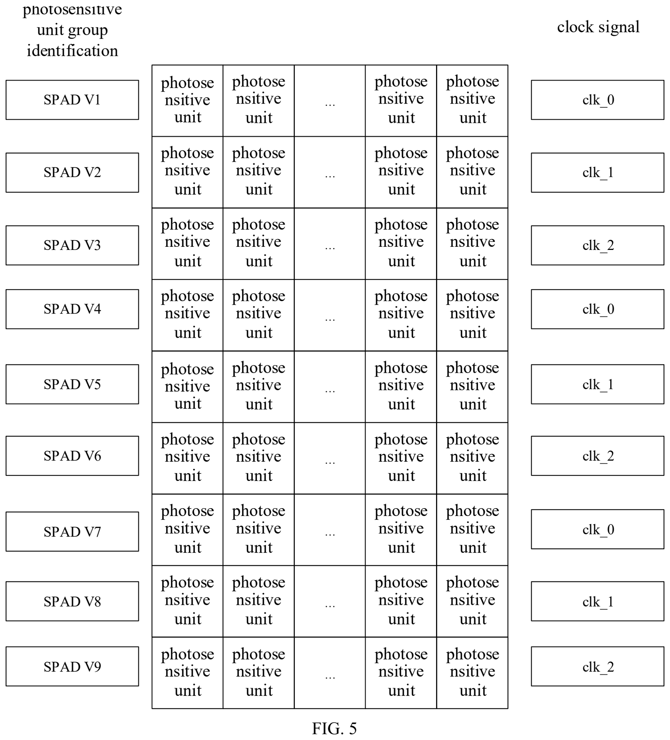

In some embodiments, when the photosensitive unit group corresponds to one sampling moment, the first order of the first photosensitive unit group in the photosensitive unit group set is determined as a first order. A first sampling moment corresponding to the first order is obtained from the at least two sampling moments, and the first sampling moment is a first target sampling moment corresponding to the first photosensitive unit group. In this way, referring to FIG. 5, the photosensitive unit array comprises 9 photosensitive unit groups SPAD V1-SPAD V9, wherein every three photosensitive unit groups are divided into one photosensitive unit group set, and the three photosensitive unit groups in the photosensitive unit group set correspond to three-phase clock signals clk_0-clk_2 respectively, the three-phase clock signals form a cycle in units of the photosensitive unit group set, and different photosensitive unit group sets correspond to the three-phase clock signals.

In example 2, when one photosensitive unit group corresponds to at least two target sampling moments, each photosensitive unit in the photosensitive unit group is sampled at at least two second target sampling moments in the at least two sampling moments, to obtain at least two first unit sampling data of each photosensitive unit in the photosensitive unit group, one first unit sampling data corresponding to one second target sampling moment. The at least two first unit sampling data of each photosensitive unit are fused to obtain the unit sampling data of each photosensitive unit.

In this way, the photosensitive unit corresponds to at least two sampling moments.

In this implementation, at least two second target sampling moments corresponding to the photosensitive unit group are used to sample at least two photosensitive units in the photosensitive unit group, thereby improving the sampling rate of sampling the photosensitive unit and improving the accuracy of subsequent processing.

For example, one photosensitive unit is connected with at least two flip-flop groups, the flip-flop group comprises at least one flip-flop, at least two data output by the at least two flip-flop groups connected with each photosensitive unit in the photosensitive unit group at different moments are obtained, and the phases of clock signals input by different flip-flop groups of the same photosensitive unit are different. The at least two data output by the flip-flop groups connected with each photosensitive unit in the photosensitive unit group are determined as at least two first unit sampling data of each photosensitive unit in the photosensitive unit group. The at least two first unit sampling data of each photosensitive unit are fused to obtain the unit sampling data of each photosensitive unit.

In this way, the phases of clock signals input by different flip-flop groups are different, and the moments of outputting data by different flip-flop groups are also different. One photosensitive unit is connected with at least two flip-flop groups, which means that the photosensitive unit is sampled for multiple times in one detection period, thereby increasing the sampling rate of sampling the photosensitive unit.

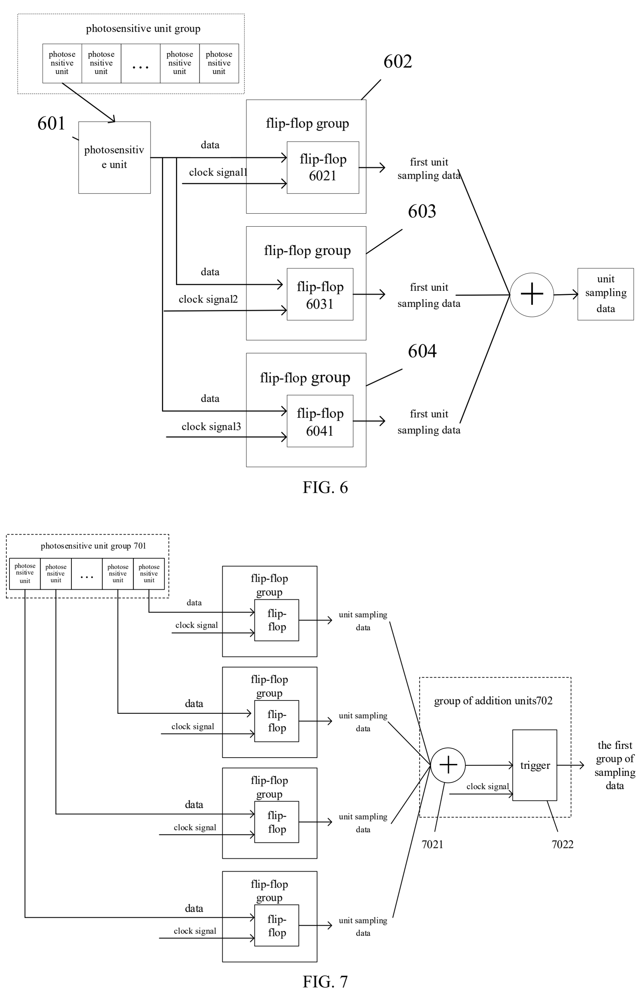

Referring to FIG. 6, taking the connection of one photosensitive unit and three flip-flop groups as an example, for any photosensitive unit 601 in the at least two photosensitive units, data corresponding to the photosensitive unit 601 is input into the three flip-flop groups 602-604 connected with the photosensitive unit 601, and the phases of clock signals (clock signals 1-3) input into the three flip-flop groups 602-604 are different. For a flip-flop group 602 in the three flip-flop groups, in a case where a clock signal input into a flip-flop 6021 in the flip-flop group 602 is a rising edge or a falling edge, the flip-flop 6021 updates data input into a data input end of the flip-flop 6021 to a data output end, and data of the data output end is a first unit sampling data of the photosensitive unit 601. Because the phases of the clock signals input into the three flip-flop groups 602-604 are different, the arrival times of the rising edges or the falling edges of the clock signals in the three flip-flop groups 602-604 are different, and sampling moments of the three flip-flop groups 602-604 for the photosensitive unit are different, and therefore, the three first unit sampling data correspond to different sampling moments, in other words, the photosensitive unit is sampled three times in the detection period, and the three first unit sampling data are obtained. The three first unit sampling data of the photosensitive unit 601 are added to obtain a unit sampling data of the photosensitive unit 601.

It should be noted that the above is described taking the connection of one photosensitive unit and three flip-flop groups as an example, and in other embodiments, one photosensitive unit can be connected with two or more than three flip-flop groups, and the embodiments of the present application do not limit this. In addition, in a case where one photosensitive unit can be connected with two or more than three flip-flop groups, the manner of sampling one photosensitive unit to obtain at least two first unit sampling data and fusing the at least two first unit sampling data belongs to the same inventive concept as the above description.

302. fusing the unit sampling data of each photosensitive unit in the photosensitive unit group to obtain first group sampling data of the photosensitive unit group.

The first group sampling data is data obtained by sampling the photosensitive unit group, that is, a sum of data obtained by sampling at least two photosensitive units in the photosensitive unit group. In a case where the photosensitive unit group is a photosensitive unit row, the first group sampling data is also referred to as row sampling data. In a case where the photosensitive unit group is a photosensitive unit column, the first group sampling data is also referred to as column sampling data. In a case where the photosensitive unit group is a photosensitive unit block, the first group sampling data is also referred to as block sampling data. The first group sampling data represents the number of photosensitive units that sense photons in the photosensitive unit group.

In one embodiment, the unit sampling data of each photosensitive unit in the photosensitive unit group are added to obtain the first group sampling data of the photosensitive unit group.

In this embodiment, the first group of sampling data of the photosensitive unit group can be obtained by directly adding the unit sampling data of at least two photosensitive units in the photosensitive unit group, and the first group of sampling data can be obtained with high efficiency.

For example, referring to FIG. 7, in a case where the flip-flop group comprises one flip-flop, one photosensitive unit group 701 corresponds to one group of addition units 702, the data output ends of the flip-flop groups connected with the photosensitive units in the photosensitive unit group 701 are all connected with the group of addition units 702, the group of addition units 702 comprises an adder 7021 and a flip-flop 7022, the adder 7021 is used for adding input data, the flip-flop 7022 is used for outputting an addition result, the period length of a clock signal input into the flip-flop 7022 is the same as the period length of the detection period, and the clock signal is the same as the start point and the end point of the detection period. The unit sampling data of the photosensitive units in the photosensitive unit group 701 are added by the group of addition units 702, and the first group of sampling data of the photosensitive unit group is obtained.

The following describes another embodiment of the step 302.

In one embodiment, the unit sampling data of the photosensitive units in the photosensitive unit group are weighted and summed to obtain the first group of sampling data of the photosensitive unit group, and the weight corresponding to a photosensitive unit is associated with the position of the photosensitive unit in the photosensitive unit group.

In the photosensitive unit group, different positions correspond to different weights, generally, the closer to the center in the photosensitive unit group, the higher the weight, and the correspondence between the position and the weight is set by a technician according to an actual situation, and the embodiment of the application is not limited in this respect.

In this embodiment, the position of the photosensitive unit in the photosensitive unit group is used to fuse the unit sampling data of the photosensitive unit, more important sampling data is retained in the obtained first group of sampling data, unimportant sampling data is ignored, and the data amount of the first group of sampling data is reduced on the premise of maintaining accuracy.

It should be noted that the above embodiment can introduce a weight unit into the group of addition units 702 in FIG. 7, and the weight unit and the adder 701 are used to implement the weighted summation.

303. sampling the first group of sampling data of the photosensitive unit group at a target sampling moment corresponding to the photosensitive unit group in the at least two sampling moments to obtain at least one second group of sampling data of the photosensitive unit group.

In this way, after the sampling data of the photosensitive unit is obtained, the sampling data of the photosensitive unit group can be sampled again, and thus the sampling rate with the granularity of the photosensitive unit group is improved.

In one embodiment, the first group of sampling data of the photosensitive unit group is sampled at a first target sampling moment in the at least two sampling moments to obtain the second group of sampling data of the photosensitive unit group.

For example, one photosensitive unit group is connected with one flip-flop group, the flip-flop group comprises at least one flip-flop, the phases of the clock signals input by the flip-flops in the same flip-flop group are the same, the data output by the flip-flop group connected with the photosensitive unit group is obtained, the phase of the clock signal input by the flip-flop group connected with the photosensitive unit group is the phase corresponding to the first target sampling moment. The data output by the flip-flop group connected with the photosensitive unit group is determined as the second group sampling data of the photosensitive unit group.

The flip-flop is a D flip-flop. In the case where the flip-flop group comprises one flip-flop, the photosensitive unit group is connected with a data input terminal of the flip-flop; in the case where the flip-flop group comprises two or more flip-flops, a data input terminal of a first flip-flop in the flip-flop group is connected with the photosensitive unit group, a data input terminal of a second flip-flop is connected with a data output terminal of the first flip-flop, and so on, and the clock signals input by different flip-flops in the same flip-flop group are the same. The number of flip-flops in the flip-flop group is set by a technician according to an actual situation, increasing the number of flip-flops in the flip-flop group can improve the stability of sampling, and reducing the number of flip-flops in the flip-flop group can reduce resource consumption, and the embodiment of the application does not make a limitation in this aspect.

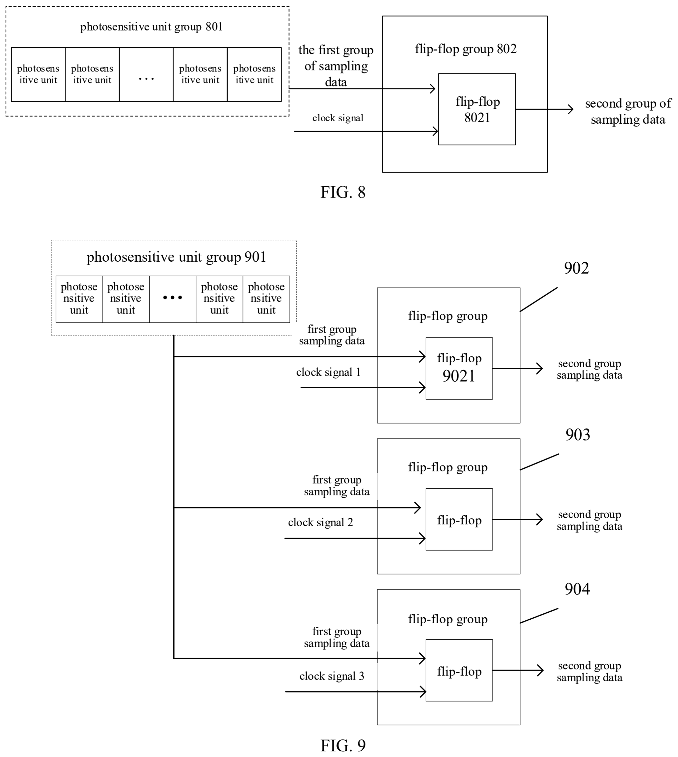

For example, referring to FIG. 8, in the case where the flip-flop group comprises one flip-flop, the first group sampling data of the photosensitive unit group 801 is input into the flip-flop group 802 connected with the photosensitive unit group 801, that is, a data input terminal of the flip-flop 8021 in the flip-flop group 802. In the case where the clock signal input into the flip-flop 8021 is a rising edge or a falling edge, the flip-flop 8021 updates the data of the input data input terminal to a data output terminal, and the data of the data output terminal is the second group sampling data of the photosensitive unit group. Since the flip-flop updates data only at the rising edge or the falling edge of the clock signal, it is indicated that any data change occurring at the data input terminal of the flip-flop will not be updated to the data output terminal in the case where the rising edge or the falling edge of the clock signal has not arrived.

The following describes another embodiment of the above step 303.

In one embodiment, the first group sampling data of the photosensitive unit group is sampled at at least two second target sampling moments in the at least two sampling moments, and at least two second group sampling data of the photosensitive unit group are obtained, one second group sampling data corresponding to one second target sampling moment.

For example, one photosensitive unit group is connected with at least two flip-flop groups, the flip-flop group comprises at least one flip-flop, at least two data output by the at least two flip-flop groups connected with the photosensitive unit group at different moments are obtained, and the phases of the clock signals input by different flip-flop groups of the same photosensitive unit group are different. The at least two data output by the flip-flop groups connected with the photosensitive unit group are determined as at least two second group sampling data of the photosensitive unit group.

The clock signals input to the different flip-flop groups are different in phase, and the output data of the different flip-flop groups are output at different times. The at least two flip-flop groups are connected to one photosensitive unit group, and the first group of sampling data of the photosensitive unit group is sampled for multiple times in one detection period, thereby increasing the sampling rate of the photosensitive unit group.

For example, referring to FIG. 9, taking the connection of one photosensitive unit group and three flip-flop groups as an example. For any one photosensitive unit group 901 in the at least two photosensitive unit groups, the first group of sampling data of the photosensitive unit group 901 is input to the three flip-flop groups 902-904 connected to the photosensitive unit group 901. The clock signals (clock signals 1-3) input to the three flip-flop groups 902-904 are different in phase. For the flip-flop group 902 in the three flip-flop groups, the data input end of the flip-flop 9021 connected to the photosensitive unit group 901 in the flip-flop group 902 updates the data input to the data input end to the data output end when the clock signal input to the flip-flop 9021 is a rising edge or a falling edge. The data of the data output end is a second group of sampling data of the photosensitive unit group 901. Because the clock signals input to the three flip-flop groups 902-904 are different in phase, the arrival times of the rising edges or the falling edges of the clock signals in the three flip-flop groups 902-904 are different, and the sampling times of the first group of sampling data of the photosensitive unit group by the three flip-flop groups 902-904 are different. Therefore, the three second groups of sampling data correspond to different sampling times. In other words, the first group of sampling data of the photosensitive unit group is sampled for three times in the detection period, and three second groups of sampling data are obtained.

304. determining the sampling data of the photosensitive unit group based on the at least one second group of sampling data of the photosensitive unit group.

In one implementation, when the number of the second groups of sampling data of the photosensitive unit group is one, the second group of sampling data of the photosensitive unit group is determined as the sampling data of the photosensitive unit group.

In one implementation, when the number of the second groups of sampling data of the photosensitive unit group is at least two, the at least two second groups of sampling data of the photosensitive unit group are fused to obtain the sampling data of the photosensitive unit group.

The above embodiments are described below by taking two examples.

Example 1: adding the at least one second group of sampling data of the photosensitive unit group to obtain the sampling data of the photosensitive unit group.

Example 2: performing weighted summation on the at least one second group of sampling data of the photosensitive unit group to obtain the sampling data of the photosensitive unit group, wherein the weight corresponding to the photosensitive unit group is associated with the position of the photosensitive unit group in the photosensitive unit array.

In the photosensitive unit array, different positions correspond to different weights. Generally, the closer a position is to the center of the photosensitive unit array, the higher the weight corresponding to the position. The correspondence between the position and the weight is set by the technician according to the actual situation, and is not limited in the application.

In some embodiments, in addition to determining the sampling data of the photosensitive unit group by the steps 302-304, the following steps can be directly performed after the step 301 to determine the sampling data of the photosensitive unit group.

In one implementation, the unit sampling data of each photosensitive unit in the photosensitive unit group is added to obtain the sampling data of the photosensitive unit group.

In one implementation, the unit sampling data of each photosensitive unit in the photosensitive unit group is weighted and summed to obtain the sampling data of the photosensitive unit group, where the weight corresponding to the photosensitive unit is associated with the position of the photosensitive unit in the photosensitive unit group.

305. fusing the sampling data of each photosensitive unit group to obtain the target sampling data of the detection period, the target sampling data being used to generate histogram data of the target object.

The sampling data of at least two photosensitive unit groups is fused for data compression, and the target sampling data of the detection period obtained is sampling data obtained after compression. The target object is an object to be ranged, and the histogram data is used to count the number of photons sensed by the photosensitive unit array in different time bins, thereby being used to range the target object. The basic principle of LiDAR ranging is that a transmitter of the LiDAR transmits a pulse signal to the target object, the pulse signal is reflected by the target object, a pixel unit or a pixel array receives a reflected echo signal of the target object, the echo signal is converted into an electric signal, a generation time (also referred to as a time stamp) of the electric signal is recorded, the generation time is used as an arrival time of the echo signal, the arrival time of the echo signal is stored, a time of flight can be obtained according to a transmission time of the pulse signal and the arrival time of the echo signal, and then the distance of the target object can be calculated according to a constant light speed and the time of flight. The histogram data can represent the number of photons sensed in different time bins, a time bin corresponding to the most photons in the histogram data is determined as the time of flight, and thus the distance between the target object and the LiDAR can be determined.

In one implementation, the sampling data of each photosensitive unit group is added to obtain the target sampling data of the detection period.

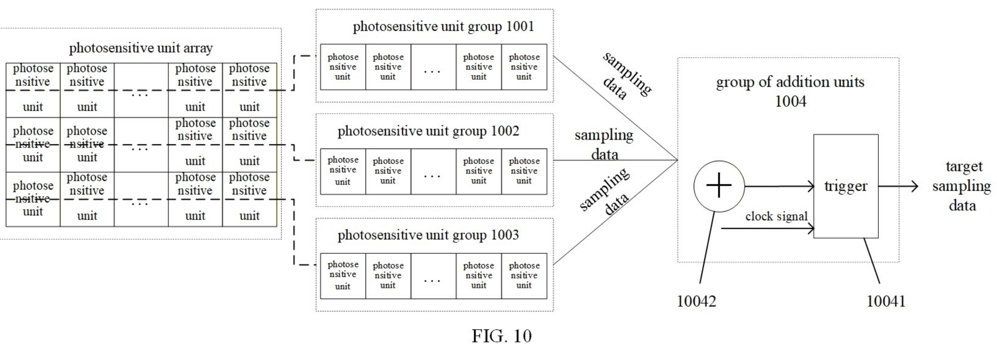

For example, referring to FIG. 10, taking an example of an photosensitive unit array comprising three photosensitive unit groups 1001-1003, the three photosensitive unit groups 1001-1003 are connected with a group of addition units 1004, and sampling data of the three photosensitive unit groups 1001-1003 can be input into the group of addition units 1004, so that the sampling data of the three photosensitive unit groups 1001-1003 are added by the group of addition units 1004 to obtain target sampling data. The group of addition units 1004 comprises an adder 10041 and a flip-flop 10042, the adder 10041 is used for adding input data, and the flip-flop 10042 is used for outputting an addition result. A clock signal input into the flip-flop 10042 has a same period length as that of the detection period, and the clock signal has a same start point and end point as those of the detection period. The sampling data of the three photosensitive unit groups 1001-1003 are added by the group of addition units 1004 to obtain the target sampling data.

In one implementation, the sampling data of the at least two photosensitive unit groups are weightedly summed to obtain the target sampling data of the detection period, where a weight corresponding to a photosensitive unit group is associated with a position of the photosensitive unit group in the photosensitive unit array.

In the photosensitive unit array, different positions correspond to different weights. Generally, a position closer to the center of the photosensitive unit array corresponds to a higher weight. The correspondence between a position and a weight is set by a technician according to an actual situation, and is not limited in the embodiments of the present application.

It should be noted that the above embodiment can introduce a weight unit into the group of addition units 1002 in FIG. 10, and the weight unit and the adder 1001 are used to implement weighted summation.

Optionally, after step 304, the following steps can be performed in addition to step 305.

In one implementation, a data collection requirement corresponding to the detection period is determined. In a case where the data collection requirement is full-amount collection, the sampling data of the at least two photosensitive unit groups are output.

The data collection requirement comprises full-amount collection and compressed collection. In the embodiments of the present application, the full-amount collection means that the sampling data of the photosensitive unit group does not need to be compressed, and the sampling data of the photosensitive unit group can be directly output. The compressed collection means that the sampling data of the photosensitive unit group needs to be compressed, and the data after compression is output. In the embodiments of the present application, the compressed collection means that the sampling data of the photosensitive unit group needs to be compressed, and the compression result is output. In a case where the data collection requirement is the compressed collection, step 305 is performed. The data collection requirement is set by a technician according to an actual situation, and is not limited in the embodiments of the present application.

In one implementation, a sampling data amount threshold corresponding to the detection period is determined. In a case where the data amount of the sampling data of the at least two photosensitive unit groups is less than or equal to the sampling data amount threshold, the sampling data of the at least two photosensitive unit groups is output.

All the optional technical solutions can be combined to form optional embodiments of the application, and details are not described herein again.

According to the technical solution provided in the embodiments of the application, in any detection period, at least two photosensitive unit groups of the LiDAR are sampled at at least two sampling moments to obtain sampling data of each photosensitive unit group, and high-rate sampling is implemented in units of photosensitive unit groups. The sampling data of the at least two photosensitive unit groups is fused, that is, the sampling data of the at least two photosensitive unit groups is compressed to obtain target sampling data of the detection period, so that the sampling data is compressed in the case of increasing the sampling rate, and the storage space consumption is reduced. Meanwhile, because the data amount is reduced, the data processing overhead when the target sampling data is used to generate a histogram of a target object can be reduced.

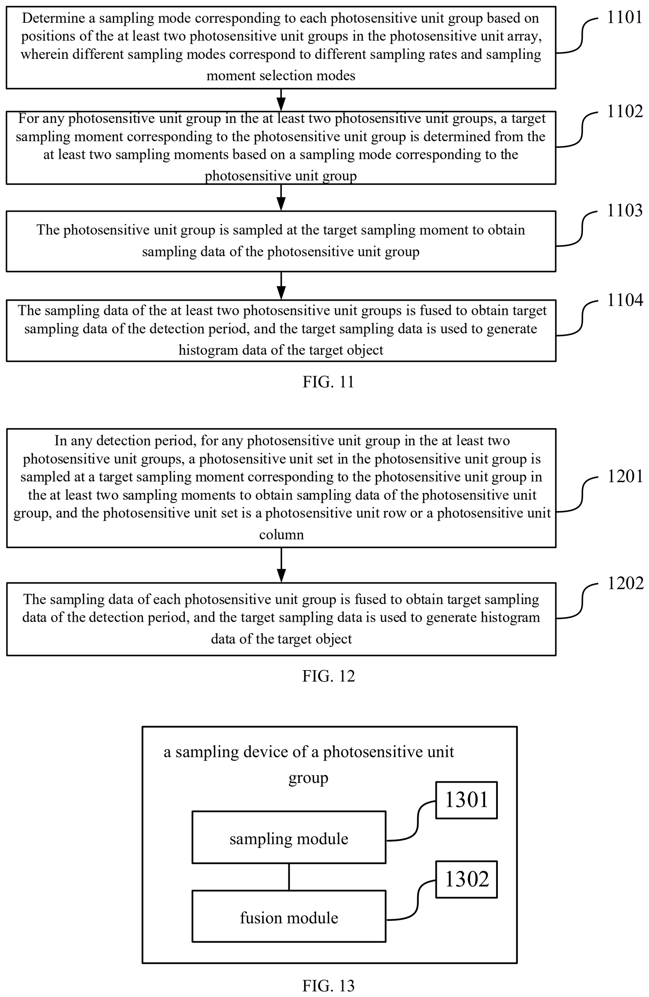

The following describes another method for sampling a photosensitive unit group provided in the embodiments of the application. Referring to FIG. 11, taking a detection chip whose execution subject is a LiDAR as an example, the method comprises the following steps.

1101. Determine a sampling mode corresponding to each photosensitive unit group based on positions of the at least two photosensitive unit groups in the photosensitive unit array, wherein different sampling modes correspond to different sampling rates and sampling moment selection modes.

In one implementation, for any photosensitive unit group of the at least two photosensitive unit groups, in a case where the photosensitive unit group is located in an edge region of the photosensitive unit array, a sampling mode corresponding to the photosensitive unit group is determined as a first sampling mode. In a case where the photosensitive unit group is located in a center region of the photosensitive unit array, the sampling mode corresponding to the photosensitive unit group is determined as a second sampling mode, and a sampling rate corresponding to the first sampling mode is less than a sampling rate corresponding to the second sampling mode.

The center region is a center region of a field of view range of the LiDAR, and the edge region is an edge region of the field of view range of the LiDAR; or the center region is a region where a target object to be detected is located, and the edge region is a region other than the center region, and the center region and the edge region are set by a technician according to an actual situation, and the embodiments of the application do not limit the center region and the edge region.

1102. For any photosensitive unit group in the at least two photosensitive unit groups, a target sampling moment corresponding to the photosensitive unit group is determined from the at least two sampling moments based on a sampling mode corresponding to the photosensitive unit group.

In one implementation, in a case where the sampling mode corresponding to the photosensitive unit group is the first sampling mode, an order of the photosensitive unit group in the photosensitive unit group set to which the photosensitive unit group belongs is determined, and sampling moments corresponding to different photosensitive unit groups in a same photosensitive unit group set are different. A first target sampling moment corresponding to the photosensitive unit group is determined from the at least two sampling moments based on the order of the photosensitive unit group in the photosensitive unit group set to which the photosensitive unit group belongs.

In one implementation, in a case where the sampling mode corresponding to the photosensitive unit group is the second sampling mode, the at least two sampling moments are determined as at least two second target sampling moments corresponding to the photosensitive unit group.

1103. The photosensitive unit group is sampled at the target sampling moment to obtain sampling data of the photosensitive unit group.

The implementation process of the step 1103 is the same as that of the steps 301-304, and details are not described herein again.

1104. The sampling data of the at least two photosensitive unit groups is fused to obtain target sampling data of the detection period, and the target sampling data is used to generate histogram data of the target object.

The implementation process of the step 1104 is the same as that of the step 305, and details are not described herein again.

According to the technical solution provided in the embodiments of the present application, the sampling mode corresponding to the photosensitive unit group is determined based on the position of the photosensitive unit group in the photosensitive unit array. The corresponding sampling mode is used to sample the photosensitive unit group, so that personalized sampling of the photosensitive unit group is achieved, and the sampling effect is improved. Meanwhile, the sampling data of the at least two photosensitive unit groups is fused, that is, the sampling data of the at least two photosensitive unit groups is compressed to obtain the target sampling data of the detection period, so that the compression of the sampling data is achieved under the condition of increasing the sampling rate, and the storage space consumption is reduced. In addition, because the data volume is reduced, the data processing overhead when the target sampling data is used to generate the histogram of the target object can be reduced.

The following describes another method for sampling a photosensitive unit group provided in the embodiments of the present application. Referring to FIG. 12, taking a detection chip whose execution subject is a LiDAR as an example, the method comprises the following steps.

1201. In any detection period, for any photosensitive unit group in the at least two photosensitive unit groups, a photosensitive unit set in the photosensitive unit group is sampled at a target sampling moment corresponding to the photosensitive unit group in the at least two sampling moments to obtain sampling data of the photosensitive unit group, and the photosensitive unit set is a photosensitive unit row or a photosensitive unit column.

In a case where the photosensitive unit group is a photosensitive unit row, the photosensitive unit set in the photosensitive unit group is a single photosensitive unit row in the photosensitive unit group. That is, the photosensitive unit group can comprise two photosensitive unit rows, and the photosensitive unit set is any one of the two photosensitive unit rows. Correspondingly, in a case where the photosensitive unit group is a photosensitive unit column, the photosensitive unit set in the photosensitive unit group is a single photosensitive unit column in the photosensitive unit group. In a case where the photosensitive unit group is a photosensitive unit block, the photosensitive unit set in the photosensitive unit group is a photosensitive unit sub-block in the photosensitive unit group. It should be noted that an arrangement manner of the photosensitive unit set in the photosensitive unit group is set by a technician according to an actual situation, and the embodiment of the present application does not limit the arrangement manner.

In one implementation, in any detection period, the photosensitive unit set in the photosensitive unit group is sampled at the set sampling moment corresponding to the photosensitive unit set in the at least two sampling moments, to obtain set sampling data of the photosensitive unit set in the photosensitive unit group. The set sampling data of the photosensitive unit set in the photosensitive unit group is fused to obtain the sampling data of the photosensitive unit group.

For example, for any photosensitive unit set in the photosensitive unit group, the set sampling moment corresponding to the photosensitive unit set is determined from the at least two sampling moments based on the sampling mode corresponding to the photosensitive unit set. The photosensitive unit set is sampled at the set sampling moment, to obtain the set sampling data of the photosensitive unit set.

For example, in a case where the sampling mode corresponding to the photosensitive unit set is a first sampling mode, an order of the photosensitive unit set in the photosensitive unit group is determined. The set sampling moment corresponding to the photosensitive unit set is determined from the at least two sampling moments based on the order of the photosensitive unit set in the photosensitive unit group. In a case where the sampling mode corresponding to the photosensitive unit set is a second sampling mode, the at least two sampling moments are determined as the set sampling moment corresponding to the photosensitive unit set, and a sampling rate corresponding to the first sampling mode is less than a sampling rate corresponding to the second sampling mode.

1202. The sampling data of each photosensitive unit group is fused to obtain target sampling data of the detection period, and the target sampling data is used to generate histogram data of the target object.

The implementation process of step 1202 is the same as that of step 305, and details are not described herein again.

FIG. 13 is a schematic diagram of a structure of a sampling device of a photosensitive unit group provided in an embodiment of the present application. As shown in FIG. 13, the device comprises a sampling module 1301 and a fusion module 1302.

The sampling module is configured to sample, in any detection period, at least two photosensitive unit groups of the LiDAR at at least two sampling moments to obtain sampling data of each photosensitive unit group.

The fusion module is configured to fuse the sampling data of the at least two photosensitive unit groups to obtain target sampling data of the detection period, and the target sampling data is used to generate histogram data of a target object.

In one implementation, the sampling module is configured to, for any photosensitive unit group of the at least two photosensitive unit groups, sample the photosensitive units in the photosensitive unit group at a target sampling moment corresponding to the photosensitive unit group in the at least two sampling moments to obtain the sampling data of the photosensitive unit group.

In one implementation, the sampling module is configured to sample the photosensitive units in the photosensitive unit group at a target sampling moment corresponding to the photosensitive unit group in the at least two sampling moments to obtain unit sampling data of each photosensitive unit in the photosensitive unit group. The unit sampling data of each photosensitive unit in the photosensitive unit group is fused to obtain the sampling data of the photosensitive unit group.

In one implementation, the sampling module is configured to add the unit sampling data of each photosensitive unit in the photosensitive unit group to obtain the sampling data of the photosensitive unit group. Alternatively, the unit sampling data of each photosensitive unit in the photosensitive unit group is weightedly summed to obtain the sampling data of the photosensitive unit group, where a weight corresponding to the photosensitive unit is associated with a position of the photosensitive unit in the photosensitive unit group.

In one implementation, the device further comprises:
a sampling mode determination module configured to determine, based on a position of each photosensitive unit group in the photosensitive unit array of the LiDAR, a sampling mode corresponding to each photosensitive unit group, and different sampling modes correspond to different sampling rates and sampling moment selection modes.

The sampling module is configured to determine, based on the sampling mode corresponding to the photosensitive unit group, a target sampling moment corresponding to the photosensitive unit group from the at least two sampling moments. The photosensitive unit group is sampled at the target sampling moment to obtain the sampling data of the photosensitive unit group.

In one implementation, the sampling mode determination module, for any photosensitive unit group of the at least two photosensitive unit groups, determines the sampling mode corresponding to the photosensitive unit group as a first sampling mode in a case where the photosensitive unit group is located in an edge region of the photosensitive unit array, and determines the sampling mode corresponding to the photosensitive unit group as a second sampling mode in a case where the photosensitive unit group is located in a center region of the photosensitive unit array, where a sampling rate corresponding to the first sampling mode is less than a sampling rate corresponding to the second sampling mode.

In one implementation, the sampling module is configured to, for any photosensitive unit group in the at least two photosensitive unit groups, sample the photosensitive unit group at a target sampling moment corresponding to the photosensitive unit group in the at least two sampling moments, to obtain sampling data of the photosensitive unit group, the photosensitive unit group being a photosensitive unit row or a photosensitive unit column.

In one implementation, the sampling module is configured to sample the photosensitive unit group at a set sampling moment corresponding to each photosensitive unit set in the photosensitive unit group at the at least two sampling moments, to obtain set sampling data of each photosensitive unit set in the photosensitive unit group, and to fuse the set sampling data of each photosensitive unit set in the photosensitive unit group, to obtain the sampling data of the photosensitive unit group.

In one implementation, the sampling module is configured to, for any photosensitive unit set in the photosensitive unit group, determine a set sampling moment corresponding to the photosensitive unit set from the at least two sampling moments based on a sampling mode corresponding to the photosensitive unit set, and sample the photosensitive unit set at the set sampling moment to obtain set sampling data of the photosensitive unit set.

In one implementation, the sampling module is configured to, in a case where the sampling mode corresponding to the photosensitive unit set is a first sampling mode, an order of the photosensitive unit set in the photosensitive unit group is determined; and a set sampling moment corresponding to the photosensitive unit set is determined from the at least two sampling moments based on the order of the photosensitive unit set in the photosensitive unit group. In a case where the sampling mode corresponding to the photosensitive unit set is a second sampling mode, the at least two sampling moments are determined as the set sampling moment corresponding to the photosensitive unit set. The sampling rate corresponding to the first sampling mode is smaller than the sampling rate corresponding to the second sampling mode.

In one implementation, the fusion module is configured to add the sampling data of the at least two photosensitive unit groups, to obtain the target sampling data of the detection period. Alternatively, the fusion module is configured to perform weighted summation on the sampling data of the at least two photosensitive unit groups, to obtain the target sampling data of the detection period, wherein a weight corresponding to the photosensitive unit group is associated with a position of the photosensitive unit group in the photosensitive unit array.

In one implementation, the device further comprises:
an output module configured to determine a data collection requirement corresponding to the detection period. In a case where the data collection requirement is full-amount collection, the sampling data of the at least two photosensitive unit groups is output. Alternatively, a sampling data amount threshold corresponding to the detection period is determined. In a case where a data amount of the sampling data of the at least two photosensitive unit groups is less than or equal to the sampling data amount threshold, the sampling data of the at least two photosensitive unit groups is output.

It should be noted that: when the sampling device of the photosensitive unit group provided by the above embodiment samples the photosensitive unit array, only the division of the above functional modules is exemplified, and in actual application, the above functions can be completed by different functional modules according to needs, that is, the internal structure of the computer device is divided into different functional modules to complete all or part of the functions described above. In addition, the sampling device of the photosensitive unit group and the sampling method embodiment of the photosensitive unit group provided by the above embodiment belong to the same concept, and the specific implementation process is detailed in the method embodiment, which is not repeated here.

According to the technical scheme provided by the embodiment of the application, in any detection period, at least two photosensitive unit groups of the LiDAR are sampled at at least two sampling moments, sampling data of each photosensitive unit group is obtained, and high-rate sampling in units of photosensitive unit groups is implemented. The sampling data of the at least two photosensitive unit groups is fused, that is, the sampling data of the at least two photosensitive unit groups is compressed, target sampling data of the detection period is obtained, histogram data of a target object can be generated by using the target sampling data, and thus compression of the sampling data is implemented under the condition of increasing the sampling rate, and storage space consumption and data processing overhead are reduced.

The embodiment of the application provides a LiDAR for executing the method, the LiDAR comprising at least two photosensitive unit groups, at least two flip-flop groups, a clock signal generator and an addition unit group, one photosensitive unit group being connected with at least one flip-flop group. The clock signal generator is connected with the at least two flip-flop groups respectively.

In any detection period, the clock signal generator generates clock signals of at least two phases and sends the clock signals of the at least two phases to corresponding flip-flop groups respectively, one phase corresponding to one sampling moment.

The at least two flip-flop groups output sampling data of each photosensitive unit group based on the input clock signal and photosensitive data of the photosensitive unit group.

The addition unit group fuses the sampling data of the at least two photosensitive unit groups to obtain target sampling data of the detection period, and the target sampling data is used to generate histogram data of a target object.

In one implementation, for any photosensitive unit group in the at least two photosensitive unit groups, a flip-flop group connected with the photosensitive unit group in the at least two flip-flop groups outputs sampling data of the photosensitive unit group based on the input clock signal and unit photosensitive data of a photosensitive unit in the photosensitive unit group.

In one implementation, the addition unit group adds the sampling data of the at least two photosensitive unit groups to obtain the target sampling data of the detection period.

Alternatively, the addition unit group performs weighted summation on the sampling data of the at least two photosensitive unit groups to obtain the target sampling data of the detection period, wherein a weight corresponding to the photosensitive unit group is associated with a position of the photosensitive unit group in the photosensitive unit array.

It should be noted that: the LiDAR provided in the above embodiment is only used as an example to illustrate the division of the functional modules, and in actual application, the above functions can be completed by different functional modules according to requirements, that is, the internal structure of the LiDAR is divided into different functional modules to complete all or part of the functions described above. In addition, the LiDAR and the sampling method of the photosensitive unit group provided in the above embodiment belong to the same concept, and the specific implementation process is described in the method embodiment, and will not be repeated here.

According to the technical scheme provided in the embodiment, in any detection period, at least two photosensitive unit groups of the LiDAR are sampled at at least two sampling moments, sampling data of each photosensitive unit group is obtained, and high-rate sampling in units of the photosensitive unit group is implemented. The sampling data of the at least two photosensitive unit groups is fused, that is, the sampling data of the at least two photosensitive unit groups is compressed, target sampling data of the detection period is obtained, histogram data of a target object can be generated by using the target sampling data, and thus the compression of the sampling data is implemented under the condition of improving the sampling rate, and the storage space consumption and the data processing cost are reduced.

The embodiment of the application provides a chip, which comprises at least two photosensitive unit groups, at least two flip-flop groups, a clock signal generator and an addition unit group, one photosensitive unit group is connected with at least one flip-flop group, and the clock signal generator is connected with the at least two flip-flop groups respectively.

In any detection period, the clock signal generator generates clock signals of at least two phases and sends the clock signals of the at least two phases to corresponding flip-flop groups respectively, and one phase corresponds to one sampling moment.

The at least two flip-flop groups output sampling data of each photosensitive unit group based on the input clock signal and photosensitive data of the photosensitive unit group.

The addition unit group fuses the sampling data of the at least two photosensitive unit groups to obtain target sampling data of the detection period, and the target sampling data is used to generate histogram data of a target object.

It should be noted that: the chip provided in the above embodiment is only used as an example to illustrate the division of the functional modules, and in actual application, the above functions can be completed by different functional modules according to requirements, that is, the internal structure of the chip is divided into different functional modules to complete all or part of the functions described above. In addition, the chip and the sampling method of the photosensitive unit group provided in the above embodiment belong to the same concept, and the specific implementation process is described in the method embodiment, and will not be repeated here.

According to the technical scheme provided by the embodiment of the application, at least two photosensitive unit groups of the LiDAR are sampled at at least two sampling moments in any detection period, sampling data of each photosensitive unit group is obtained, and high-rate sampling in units of photosensitive unit groups is implemented. The sampling data of the at least two photosensitive unit groups is fused, that is, the sampling data of the at least two photosensitive unit groups is compressed, target sampling data of the detection period is obtained, histogram data of a target object can be generated by using the target sampling data, and therefore, the compression of the sampling data is implemented under the condition of increasing the sampling rate, and the storage space consumption and the data processing cost are reduced.

In an example embodiment, a computer-readable storage medium, for example, a memory comprising a computer program, is also provided, where the computer program is executable by a processor to implement the method for sampling the photosensitive unit group in the above embodiment. For example, the computer-readable storage medium can be a Read-Only Memory (ROM), a Random Access Memory (RAM), a Compact Disc Read-Only Memory (CD-ROM), a magnetic tape, a floppy disk, an optical data storage device, and the like.

In an example embodiment, a computer program product or a computer program is also provided, where the computer program product or the computer program comprises program code stored in a computer readable storage medium, a processor of a computer device reads the program code from the computer readable storage medium, and the processor executes the program code to enable the computer device to implement the method for sampling the photosensitive unit group.

In some embodiments, the computer program related to the embodiments of the application can be deployed on one computer device to execute, or on a plurality of computer devices located in one place to execute, or on a plurality of computer devices distributed in multiple places and interconnected through a communication network to execute. The plurality of computer devices distributed in multiple places and interconnected through the communication network can constitute a blockchain system.

Those of ordinary skill in the art can understand that all or some of the steps of the above embodiments can be completed by hardware, or by a program instructing related hardware. The program can be stored in a computer readable storage medium, and the storage medium can be a read-only memory, a magnetic disk, an optical disk, or the like.

The above merely is an optional embodiment of the application and is not used to limit the application. Any modification, equivalent replacement, improvement, and the like made within the spirit and principle of the application shall be comprised in the protection scope of the application.

## Claims

1. A sampling method for a photosensitive unit group, comprising:
sampling, at at least two sampling moments in a detection period, at least two photosensitive unit groups of a LiDAR respectively to obtain sampling data of each photosensitive unit group; and
fusing the sampling data of the at least two photosensitive unit groups to obtain target sampling data of the detection period, the target sampling data being used for generating histogram data of a target object.

2. The method according to claim 1, wherein the sampling, at at least two sampling moments in a detection period, at least two photosensitive unit groups of a LiDAR respectively to obtain sampling data of each photosensitive unit group comprises:
for any photosensitive unit group in the at least two photosensitive unit groups, sampling, at a target sampling moment corresponding to the photosensitive unit group in the at least two sampling moments, photosensitive units in the photosensitive unit group to obtain sampling data of the photosensitive unit group.

3. The method according to claim 2, wherein the sampling, at a target sampling moment corresponding to the photosensitive unit group in the at least two sampling moments, photosensitive units in the photosensitive unit group to obtain sampling data of the photosensitive unit group comprises:
sampling, at the target sampling moment corresponding to the photosensitive unit group in the at least two sampling moments, photosensitive units in the photosensitive unit group to obtain unit sampling data of each photosensitive unit in the photosensitive unit group; and
fusing the unit sampling data of each photosensitive unit in the photosensitive unit group to obtain the sampling data of the photosensitive unit group.

4. The method according to claim 3, wherein the fusing the unit sampling data of each photosensitive unit in the photosensitive unit group to obtain the sampling data of the photosensitive unit group comprises:
adding the unit sampling data of each photosensitive unit in the photosensitive unit group to obtain the sampling data of the photosensitive unit group;
alternatively, performing weighted summation of the unit sampling data of each photosensitive unit in the photosensitive unit group to obtain the sampling data of the photosensitive unit group, wherein a weight corresponding to a photosensitive unit is associated with the position of the photosensitive unit in the photosensitive unit group.

5. The method according to claim 2, before sampling the photosensitive units in the photosensitive unit group at the target sampling moment corresponding to the photosensitive unit group in the at least two sampling moments to obtain the sampling data of the photosensitive unit group, the method further comprises:
determining a sampling mode corresponding to each photosensitive unit group based on a position of each photosensitive unit group in a photosensitive unit array of the LiDAR, wherein different sampling modes correspond to different sampling rates and sampling moment selection modes,
wherein the sampling the photosensitive units in the photosensitive unit group at the target sampling moment corresponding to the photosensitive unit group in the at least two sampling moments to obtain the sampling data of the photosensitive unit group comprises:
determining the target sampling moment corresponding to the photosensitive unit group from the at least two sampling moments based on the sampling mode corresponding to the photosensitive unit group; and
sampling the photosensitive unit group at the target sampling moment to obtain the sampling data of the photosensitive unit group.

6. A sampling device for a photosensitive unit group, comprising:
a sampling module, configured to sample at least two photosensitive unit groups of a LiDAR at at least two sampling moments in a detection period to obtain sampling data of each photosensitive unit group; and
a fusion module, configured to fuse the sampling data of the at least two photosensitive unit groups to obtain target sampling data of the detection period, wherein the target sampling data is used to generate histogram data of a target object.

7. A LiDAR, comprising at least two photosensitive unit groups, at least two flip-flop groups, a clock signal generator, and an addition unit group, wherein one photosensitive unit group is connected with at least one flip-flop group, and the clock signal generator is connected with the at least two flip-flop groups respectively;
in a detection period, the clock signal generator is configured to generate clock signals of at least two phases and send the clock signals of the at least two phases to corresponding flip-flop groups respectively, wherein one phase corresponds to one sampling moment;
the at least two flip-flop groups are configured to output sampling data of each photosensitive unit group based on an input clock signal and photosensitive data of the photosensitive unit group; and
the addition unit group is configured to fuse the sampling data of the at least two photosensitive unit groups to obtain target sampling data of the detection period, wherein the target sampling data is used to generate histogram data of a target object.

8. The LiDAR according to claim 7, wherein for any one of the at least two photosensitive unit groups, a flip-flop group corresponding to the photosensitive unit group in the at least two flip-flop groups outputs sampling data of the photosensitive unit group based on the input clock signal and unit photosensitive data of the photosensitive units in the photosensitive unit group.

9. A chip, comprising at least two photosensitive unit groups, at least two groups of flip-flops, a clock signal generator and a group of adders, wherein one photosensitive unit group is connected to at least one group of flip-flops, and the clock signal generator is connected to the at least two groups of flip-flops respectively;
in a detection period, the clock signal generator is configured to generate clock signals of at least two phases and send the clock signals of the at least two phases to corresponding flip-flop groups respectively, wherein one phase corresponds to one sampling moment;
the at least two groups of flip-flops are configured to output sampling data of each photosensitive unit group based on the input clock signal and photosensitive data of the photosensitive unit group; and
the group of adders is configured to fuse the sampling data of the at least two photosensitive unit groups to obtain target sampling data of the detection period, wherein the target sampling data is used to generate histogram data of a target object.

10. A computer readable storage medium, having stored thereon at least one computer program which, when loaded and executed by a processor, causes the processor to implement the method according to any one of claims 1 to 5.
